# EUROPEAN PATENT APPLICATION

(11) **EP 4 086 294 A1**
(43) Date of publication of application: **09.11.2022**
(21) Application number: 21305591.6
(22) Date of filing: 07.05.2021
(51) Int. Cl.: C08F 222/32, C09J 4/00

(54) **TWO-PART CURABLE COMPOSITION**

(71) Applicant: Bostik SA, 92700 Colombes (FR)
(72) Inventor: GARRA, Patxi, 08193 BELLATERRA, BARCELONA (ES); SOLERA SENDRA, Jordi, 08193 BELLATERRA, BARCELONA (ES); MORENO RUEDA, Maryluz, 08193 BELLATERRA, BARCELONA (ES); TCHAPLINSKI, Vladimir, 08193 BELLATERRA, BARCELONA (ES)
(74) Representative: Arkema Patent

(57) **Abstract**

The present invention relates to a two-part curable composition comprising:
• a first part (component A) comprising :
• at least 50% by weight based on the total weight of the first part, of one or more alkyl cyanoacrylate monomer, said alkyl cyanoacrylate monomer comprising only one cyanoacrylate function;
• one poly(2-cyanoacrylate) monomer having the following formula (I): 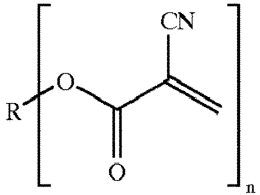 wherein R is an organic moiety and n is an integer higher or equal to 2;

• a second part (component B) comprising a (meth)acrylate component having at least two (meth)acrylate functions.

## Description

### Field of the invention

The present invention relates to the field of two-part curable composition based on cyanoacrylates.

The present invention also related to the use of the two-part curable composition.

### Background art

Adhesive compositions based on cyanoacrylate (CA) esters are well-known, e.g. as instant adhesives or so-called 'superglues'. They are popular in many areas of application and are used by consumers, professional craft workers and industrial assemblers. They are typically solvent free, 100% reactive materials, noted for their ability to form strong adhesive bonds on many different substrates rapidly.

There exist 1K or 2K (two-part) CA adhesives in the field. When describing 2K approaches, it is common to refer to separate components or parts of the adhesive and/or its package, for example as 'Part A', and 'Part B'. Thus, if Part A contains a CA composition in one compartment or reservoir, then Part B may contain compositions selected to activate, react and/or modify physical properties (plasticize, colour, toughen, etc.) of the adhesive that results from mixing the two parts by any means.

The two-part approach typically offers several benefits over single part (1K) adhesives, but improvements are still necessary. There exist different 2K CA adhesives on the market with gap cure and fast fixturing time on a variety of substrates.

In the past, efforts have been made to improve the heat resistance of cured products of cyanoacrylate composition, particularly upon exposure to temperature of 80°C or higher. As the temperature increase progresses, a degradation of polycyanoacrylate adhesives begins and the physical properties deteriorate. As a result, commercial applications for cyanoacrylates where exposure to elevated temperature conditions is likely have proven tricky and consequently have been limited.

However, conventional CA adhesives have generally found limited commercial applications where hot environment exposure is likely as they do not possess simultaneously "hot strength" (or high "service temperature") (i.e. the ability to retain high tensile strength, advantageously approximately higher than 5MPa, while being exposed to elevated temperatures typically above at least 100°C) and heat resistance (ability to not degrade at high temperatures such as for example above 100°C). The "hot strength" or "service temperature" of an adhesive is not to be confused with its "heat resistance". Heat resistance refers to the adhesives' ability to not degrade after continuous exposure to elevated temperatures even for prolonged periods (for example, 3 days at 150°C), so long as they are not subjected to mechanical loads simultaneously while at the elevated temperature. For example, when metal substrates are bonded by non-modified ethyl cyanoacrylate based adhesives, rapid reductions in bond strength are observed at temperatures above 100 °C. The heat resistance of an adhesive is an important feature, but it is not the only way to represent performance for bonded parts in service in a hot environment.

This "hot strength" feature is important in many applications where the adhesive is submitted to high temperature under load in an early stage of its life, such as in electronics or automotive field. For some applications, hot strength has to be exhibited during significant amount of time e.g. more than 3 days at 150°C. It can concern for examples adhesives used for manufacturing automotive part in a process at elevated temperature, or adhesives used for bonding parts near the car engine.

There is thus a need for new CA adhesives that, exhibit a good compromise between fast fixturing time and, good thermal resistance and high hot strength of the cured assembled substrates.

### Detailed description of the invention

The present invention concerns a two-part curable composition comprising:
- a first part (component A) comprising :
   - at least 50% by weight based on the total weight of the first part, of one or more alkyl cyanoacrylate monomer, said alkyl cyanoacrylate monomer comprising only one cyanoacrylate function;
   - one poly(2-cyanoacrylate) monomer having the following formula (I): 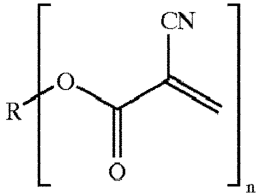 wherein R is an organic moiety and n is an integer higher or equal to 2;
- a second part (component B) comprising a (meth)acrylate component having at least two (meth)acrylate functions.

In the context of the present invention, it is understood that the term "approximately" referred to a determined value indicates that a certain variation for said value is accepted, generally of +/- 5 %.

The term 'working lifetime' or 'Working Time ("WT") used throughout the description refers to the period between first admixing of a curative into the cyanoacrylate composition and subsequent application of the thus activated composition to parts, that is the time the activated product resides or remains in the static mixing element (that is used to unite adhesive components and as a dispensing nozzle) itself, i.e., between dispensing operations. Once curative is admixed the curing process begins and continues as the adhesive is dispensed from the static mixing element.

The term 'Open Time' ('OT') refers to the time wherein already activated and subsequently dispensed adhesive remains workable, that is, not substantially cured when applied as a drop, bead, or volume on one substrate, to the extent that it cannot form an effective adhesive bond when used to unite a second substrate. Open time thus describes the period wherein the adhesive remains activated but substantially uncured and ready to usefully bond parts. An adhesive with a long OT refers to one that does not set-up prematurely before parts are assembled even after residing for a relatively long time on single parts.

The term 'Fixture time' ("FT") used in the description is a measure of bonding or fixturing speed defined as the time taken for a bonded assembly, using a minimum quantity of adhesive (a 'small' drop) on two matching substrates to have the ability to suspend a 3 Kg weight for longer than 10 seconds, when the weight is hung on one end of a 250 mm² bonded assembly in a vertical orientation when the entire assessment is carried out at ambient temperature (approximately 25°C) and humidity (50 %HR).

The ranges disclosed in this description include both the lower and the upper limit thereof. For example, the expressions "ranging from x to y" or "between x and y" comprises the limits x and y.

### Component A - First part

### Alkyl cyanoacrylate monomer(s)

The component A comprises at least 50% by weight based on the total weight of said component A, of one or more alkyl cyanoacrylate monomer, said alkyl cyanoacrylate monomer comprising only one cyanoacrylate function.

In a preferred embodiment, alkyl cyanoacrylate monomer has the general formula (II): 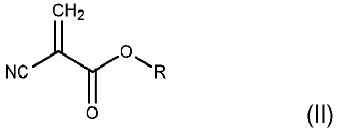 wherein R is a C₁-C₁₈ linear or branched alkyl group, preferably a C₁-C₁₀ linear or branched alkyl group, and even more preferably a C₁-C₈ linear or branched alkyl group.

The alkyl cyanoacrylate monomer may be chosen from the group consisting of methyl cyanoacrylate, ethyl cyanoacrylate, n-propyl cyanoacrylate, iso-propyl cyanoacrylate, n-butyl cyanoacrylate, sec-butyl cyanoacrylate, iso-butyl cyanoacrylate, tert-butyl cyanoacrylate, n-pentyl cyanoacrylate, 1-methylbutylcyanoacrylate, 1-ethylpropyl cyanoacrylate, neopentyl cyanoacrylate, n-hexyl cyanoacrylate, 1-methylpentyl cyanoacrylate, n-heptyl cyanoacrylate, n-octyl cyanoacrylate, 2-octyl cyanoacrylate, 2-ethylhexyl cyanoacrylate, n-nonyl cyanoacrylate, n-decyl cyanoacrylate, n-undecyl cyanoacrylate, and mixtures thereof.

Preferably, the alkyl cyanoacrylate monomer is chosen from the group consisting of methyl cyanoacrylate, ethyl cyanoacrylate, and mixtures thereof, and more preferably the alkyl cyanoacrylate monomer is ethyl cyanoacrylate.

Such monomers of formula (II) can be prepared by methods known by the skilled in the art as, for example, as in the method described in the patent US 2,467,927.

Some of them, such as ethyl cyanoacrylate (ECA) and methyl cyanoacrylate (MCA) are commercially available.

In the first part (component A) of the composition of the invention, the total content of alkyl cyanoacrylate monomer(s) may be higher or equal to 55%, preferably higher or equal to 60%, more preferably higher or equal to 70%, and in particular higher or equal to 75% by weight based on the total weight of said first part.

In one embodiment, in the first part of the composition of the invention, the total content of alkyl cyanoacrylate monomer(s) ranges from 60% to 99% by weight, preferably from 65% to 98% by weight, and more preferably from 70% to 95% by weight based on the total weight of said first part.

### Poly(2-cyanoacrylate) monomer(s)

The first part (component A) comprises a poly(2-cyanoacrylate) monomer having the following formula (I): 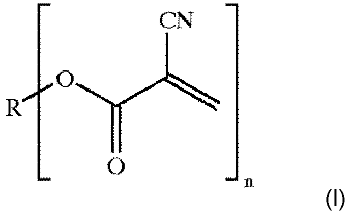 wherein R is an organic moiety and n is an integer higher or equal to 2.

In formula (I) above, n may be equal to 2, 3, or 4, and preferably n is 2.

In a preferred embodiment, the poly(2-cyanoacrylate) monomer has the following formula (I-1): 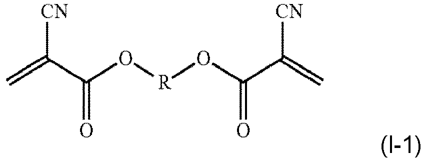 wherein R is an organic moiety.

In one embodiment, in formulas (I) and (1-1), R can be an alkylene, an alkenylene, a cycloalkylene, an arylene, an alkoxyalkylene, an aralkylene, or the divalent residue of a polymer such as for example a polyolefin, a polysiloxane, a polyester, a polyether, a polyurethane, a polyethylene glycol, a polypropylene glycol. Preferably, R represents an alkylene.

According to the invention, the term « alkylene » covers both linear and branched alkylene. The same applies to the term "alkenylene" and "alkoxyalkylene".

The poly(2-cyanoacrylate) monomer is preferably a compound of formula (1-1) wherein R represents an alkylene, more preferably comprising from 2 to 30 carbon atoms, even more preferably from 2 to 12 carbon atoms.

The poly(2-cyanoacrylate) monomer is even more preferably a compound of formula (1-1) wherein R represents -(CH₂)ₘ- with m being 2, 3, 4, 5, 6, 8, 9, 10 or 12. Desirable examples of these monomers include 1,10-decanediol biscyanoacrylate, 1,8-octanediol biscyanoacrylate, and 1,6-hexanediol biscyanoacrylate.

The poly(2-cyanoacrylate) monomer may be prepared as disclosed in WO94/15907, US2003194389, WO2015/150882 A1 or US6,096,848.

In the first part of the composition of the invention, the total content of poly(2-cyanoacrylate) monomer(s) may be higher than 3% by weight, preferably range from 3% to 20% by weight, and even more preferably from 5% to 15% by weight, based on the total weight of the first part.

### Additives

The first part of the composition may further contain at least one additive for example chosen from the group consisting of: a thixotropic agent, a thickening agent, a toughening agent, an accelerating agent, an adhesion promoter, a pigment, a colorant, a stabilizing agent, an antioxidant, a plasticizer, and mixtures thereof.

A suitable stabilizing agent may be selected from the group consisting of radical stabilizing agents, acid stabilizing agents, and mixtures thereof.

Radical stabilizing agents are typically radical polymerization inhibitors, and are preferably selected from the group consisting of 4-methoxyphenol, hydroquinone, hydroquinone monomethyl ether, hydroxytoluene butyl ether, hydroxyanisole butyl ether, 4,4'-methylenebis (2,6-di-*tert*-butylphenol), and mixtures thereof.

The total content of radical stabilizing agent(s), in the first part of the composition, may range from 0.0001% to 0.2% by weight, preferably from 0.001% to 0.1%, and more preferably from 0.002% to 0.06% by weight based on the total weight of the first part.

The acid stabilizing agents are typically inhibitors of the anionic polymerization. The acid stabilizing agent may be selected from the group consisting of Bronsted acids, Lewis acids, and mixtures thereof. The acid stabilizing agent is preferably selected from the group consisting of methanesulfonic acid, p-toluenesulfonic acid, hydrofluoric acid, boron trifluoride, boron trifluoride etherate complex, fluoroboric acid, sulphur dioxide, and mixtures thereof.

In a preferred embodiment, the first part of the composition comprises methanesulphonic acid, sulphur dioxide, boron trifluoride etherate complex, hydroquinone and hydroquinone monomethylether and 4,4'-methylenebis(2,6-di-tert-butylphenol).

In the first part of the composition, the total content of stabilizing agent(s) generally ranges from 0.0001% by weight to 1% by weight, preferably from 0.001% to 0.8%, and more preferably from 0.0015% to 0.7% by weight based on the total weight of the first part.

Typically, an adhesion promoter may be chosen from the group of aromatic carboxylic acid or anhydride, and preferably from the group consisting of trimellitic acid, trimellitic anhydride, pyromellitic acid, pyromellitic anhydride, dianhydride of 3,3',4,4'-benzophenonetetracarboxylic acid, itaconic acid, itaconic anhydride, 3-buten-1,2,3-tricarboxylic acid, and mixtures thereof.

The total content of adhesion promoter(s) in the first part of the composition may range from 0.02% to 0.1% by weight, more preferably from 0.03% to 0.08% by weight based on the total weight of the first part.

A suitable accelerating agent (or accelerator) may be selected from calixarenes, crown ethers (for example, 15 Crown 5, 18 Crown 6, Dibenzo 18 Crown 6, commercialized by Alfa Aesar), cyclodextrins, and mixtures thereof.

Typically, the total content of accelerator(s) in the first part of the composition may range from 0.01% to 0.8% by weight, preferably from 0.05% to 0.5%, and more preferably from 0.1 % to 0.3% by weight based on the total weight of the first part.

A suitable thixotropic agent may be selected from the group consisting of hydrogenated castor oil optionally modified by reaction with an amine, polyamides, silica, and mixtures thereof.

Preferably, the thixotropic agent is silica, more preferably selected from the group consisting of fumed silica, hydrophobic fumed silica (for example Aerosil^{®} R202 commercialized by Evonik), hydrophilic fumed silica and precipitated silica.

Typically, the total content of thixotropic agent(s) in the first part of the composition may range from 2% to 10% by weight, preferably from 3% to 8%, and more preferably from 4% to 7% by weight based on the total weight of the first part.

A suitable thickener or thickening agent for the first part of the composition can be selected from those that are compatible with the host monomers. Examples of such thickeners include poly(meth)acrylates, acylated cellulose polymers, for example cellulose acetate, polyvinyl acetates, partially hydrolysed polyvinyl acetates, polyvinylpyrrolidones, polyoxylates, polycaprolactones, polycyanoacrylates, vinyl acetate copolymers, for example, with vinyl chloride, copolymers of (meth)acrylates with butadiene and styrene, copolymers of vinyl chloride and acrylonitrile, copolymers of ethylene and vinyl acetate, poly[butyleneterephthalate-co-polyethyleneglycolterephthalate, copolymers of lactic acid and caprolactone, and mixtures thereof.

These thickening agents are well known to the skilled in the art and have been described in the prior art. Preferably, in the adhesive of the invention the thickener is selected from the group consisting of poly(meth)acrylates, polymethyl(meth)acrylate, polyvinylpyrrolidones, polyvinyl acetates, partially hydrolysed polyvinyl acetates, vinyl acetate copolymers, and acrylated cellulose polymers. A suitable thickener for first part of the composition can be, for example, polymethylmethacrylate (for example Degacryl^{®} M 449, Evonik), copolymers of vinyl acetate and vinyl alcohol (for example Levamelt^{®} 900, Lanxess), copolymers of vinyl chloride and vinyl acetate (for example, Vinnol^{®} H 40-60, Wacker), copolymers of ethylene, vinyl acetate, and esters or partial esters of maleic acid (for example, Vamac^{®} G, DuPont), and mixtures thereof.

Typically, the total content of thickener(s) in the first part of the composition may range from 2% to 10% by weight, preferably from 3% to 8%, and more preferably from 4% to 7% by weight based on the total weight of the first part of the composition.

Suitable tougheners or toughening agents for the first part of the composition are block copolymers (Polymethylmethacrylate-co-Polybutylacrylate-co-Polymethylmethacrylate for example); elastomeric rubbers; elastomeric polymers; liquid elastomers; polyesters; acrylic rubbers; butadiene/acrylonitrile rubber; Buna rubber; polyisobutylene; polyisoprene; natural rubber; synthetic rubber such as styrene/butadiene rubber (SBR); polyurethane polymers; ethylene-vinyl acetate polymers; fluorinated rubbers; isoprene-acrylonitrile polymers; chlorosulfonated polyethylenes; homopolymers of polyvinyl acetate; block copolymers; core-shell rubber particles (for example commercially available from Arkema under the trade name Clearstrength^{®} XT100), and mixtures thereof.

Preferably, the first part of the composition does not comprise per-compound, and more preferably does not comprise peroxide.

In a preferred embodiment, the first part of the composition comprises a thickener and a thixotropic agent, and preferably it further comprises an adhesion promoter, and at least one stabilizing agent.

### Component A

In a preferred embodiment, the component A does not comprise alkoxy cyanoacrylate, such as for example methoxyethyl cyanoacrylate.

In a preferred embodiment, the first part of the composition comprises:
- from 60 wt% to 99 wt% of alkyl cyanoacrylate monomer(s), said alkyl cyanoacrylate monomer(s) comprising only one cyanoacrylate function;
- from 3 wt% to 20 wt% of one poly(2-cyanoacrylate) monomer having the formula (1-1) as defined above
- from 2 wt% to 10 wt% of thickener(s);
- from 2 wt% to 10 wt% of thixotropic agent(s).

### Component B

The component B comprises a (meth)acrylate component having at least two (meth)acrylate functions.

The term "(meth)acrylate" refers to acrylates when their vinyl group is alpha substituted with a -H atom, or methacrylate when their vinyl group is alpha substituted with a -CH₃ (methyl) group.

The (meth)acrylate component may have two (meth)acrylate functions (difunctional) or may have more than two (meth)acrylate functions (polyfunctional such as for example trifunctional or tetrafunctional).

The (meth)acrylate component may be chosen from (meth)acrylate monomer, oligomer, polymer, and mixtures thereof.

The component B may comprise more than 80 % by weight, preferably more than 90% by weight, even more preferably more than 95% by weight of the total of (meth)acrylate component(s), based on the total weight of said component B.

The (meth)acrylate component having at least two (meth)acrylate functions may be selected from the group consisting of:
- difunctional (meth)acrylate component such as for example butanediol di(meth)acrylate, hexanediol di(meth)acrylate, diethylene glycol di(meth)acrylate, triethyleneglycol di(meth)acrylate, polyethylene glycol di(meth)acrylate, triethylene oxide dimethacrylate, tricyclodecane dimethanol diacrylate, neopentylglycol diacrylate, bisphenol-A-diacrylate, bisphenol-A-dimethacrylate, ethoxylated bisphenol-A-diacrylate, ethoxylated bisphenol-A-dimethacrylate, propoxylated bisphenol-A-diacrylate, (meth)acrylate functionalized oligomers and polymers, and mixtures thereof;
- polyfunctional (meth)acrylate component such as for example tris-(2-hydroxyethyl) isocyanurate triacrylate, trimethylolpropane tri(meth)acrylate (TMPTA), ethoxylated trimethylolpropane triacrylate (TMPETA), ethoxylated trimethylolpropane trimethacrylate, pentaerythritol tetraacrylate (PETA), pentaerythritol tetramethacrylate (PETMA), dipentaerythritol penta(meth)acrylate, dipentaerythritol hexa(meth)acrylate, (meth)acrylate functionalized oligomers and polymers, and mixtures thereof;
- mixtures thereof.

The (meth)acrylate functionalized oligomers or polymers may be difunctional or polyfunctional (meth)acrylate terminated urethane polymers or copolymers, such as for example commercialized product from SARTOMER under the tradenames CN1993CG, CN2608, CN9210.

Examples of (meth)acrylate components are readily available from well-known suppliers such as, for example, Sartomer, Arkema, and BASF.

Polyfunctional (meth)acrylate component may be esters prepared from (meth)acrylic acid and diols or polyols, such as for example butanediol, hexanediol, diethylene glycol, triethylene glycol, polyethylene glycol, trimethylolpropane, neopentylglycol, pentaerythritol, bisphenol A, or alkoxylated derivatives thereof. Their process of preparation is well known by the skilled person.

In a preferred embodiment, the (meth)acrylate component having at least two (meth)acrylate functions is selected from the group consisting of:
- difunctional (meth)acrylate component such as for example butanediol di(meth)acrylate, hexanediol di(meth)acrylate, diethylene glycol di(meth)acrylate, triethyleneglycol di(meth)acrylate, polyethylene glycol di(meth)acrylate, triethylene oxide dimethacrylate, tricyclodecane dimethanol diacrylate, neopentylglycol diacrylate, bisphenol-A-diacrylate, bisphenol-A-dimethacrylate, ethoxylated bisphenol-A-diacrylate, ethoxylated bisphenol-A-dimethacrylate, propoxylated bisphenol-A-diacrylate, and mixtures thereof;
- polyfunctional (meth)acrylate component such as for example tris-(2-hydroxyethyl) isocyanurate triacrylate, trimethylolpropane tri(meth)acrylate (TMPTA), ethoxylated trimethylolpropane triacrylate (TMPETA), ethoxylated trimethylolpropane trimethacrylate, pentaerythritol tetraacrylate (PETA), pentaerythritol tetramethacrylate (PETMA), dipentaerythritol penta(meth)acrylate, dipentaerythritol hexa(meth)acrylate, , and mixtures thereof;
- mixtures thereof.

Among the difunctional (meth)acrylate component, preference is given to ethoxylated bisphenol-A-diacrylate, ethoxylated bisphenol-A-dimethacrylate, propoxylated bisphenol-A-diacrylate, and mixtures thereof.

In one embodiment, the (meth)acrylate component is not polyethylene glycol di(meth)acrylate.

Among the polyfunctional (meth)acrylate component, preference is given to tris-(2-hydroxyethyl) isocyanurate triacrylate, trimethylolpropane tri(meth)acrylate (TMPTA), ethoxylated trimethylolpropane triacrylate (TMPETA), ethoxylated trimethylolpropane trimethacrylate, pentaerythritol tetraacrylate (PETA), pentaerythritol tetramethacrylate (PETMA), dipentaerythritol penta(meth)acrylate, dipentaerythritol hexa(meth)acrylate, and mixtures thereof, and even more preferably from ethoxylated trimethylolpropane triacrylate (TMPETA), and ethoxylated trimethylolpropane trimethacrylate.

In a preferred embodiment, the component B comprises a mixture of: a difunctional (meth)acrylate component and a polyfunctional (meth)acrylate component. More preferably, the total content of trifunctional (meth)acrylate component(s) is higher than 50 % by weight, more preferably higher than 70% by weight, based on the total weight content of the sum of difunctional (meth)acrylate component(s) and polyfunctional (meth)acrylate component(s).

In a preferred embodiment, the difunctional and polyfunctional (meth)acrylate component(s) are ethoxylated.

In a preferred embodiment, the component B comprises:
- from 5% to 40% by weight, more preferably from 5% to 20% by weight of difunctional (meth)acrylate component(s);
- from 40% to 95% by weight, more preferably from 65% to 85% by weight of polyfunctional (meth)acrylate component(s).

Preferably, the component B comprises:
- ethoxylated bisphenol A dimethacrylate ; and
- ethoxylated trimethyolpropane triacrylate (TMPETA).

### Initiator

The component B of the composition may comprise a nucleophilic initiator for cyanoacrylate polymerization.

The nucleophilic initiator may be selected from the group consisting of organic bases, salts with a hard anion, reactive inorganic fillers, metal salts with organic counter anions, and mixtures thereof. The initiator is preferably an organic base.

Suitable organic bases are, for example, caffeine, theobromine, 5-chloro-2-methylbenzothiazole, 2-(Morpholinothio) benzothiazole and tetrahydroquinolines.

Suitable salts with a hard anion are, for example, choline chloride, and benzalkonium chloride.

Suitable reactive inorganic fillers are, for example, the hydrated calcium silicate known as Promaxon^{®} D.

Suitable metal salts with organic counter anions are for example, calcium stearate, calcium acrylate, calcium methacrylate, magnesium acrylate, magnesium methacrylate, zinc acrylate, zinc methacrylate.

The second part may comprise initiator in a concentration ranging from 0.05% to 1% by weight, and more preferably from 0.1% to 0.5% by weight based on the total weight of the second part of the composition.

### Additives

The component B of the composition may further contain at least one additive for example chosen from the group consisting of: a thixotropic agent, a thickening agent, a toughening agent, an accelerating agent, a per-compound, an adhesion promoter, a pigment, a colorant, a stabilizing agent, an antioxidant, a plasticizer, and mixtures thereof.

A suitable stabilizing agent may be selected from the group consisting of radical stabilizing agents, acid stabilizing agents, and mixtures thereof.

Radical stabilizing agents are typically radical polymerization inhibitors, and are preferably selected from the group consisting of 4-methoxyphenol, hydroquinone, hydroquinone monomethyl ether, hydroxytoluene butyl ether, hydroxyanisole butyl ether, 4,4'-methylenbis (2,6-di-*tert*-butylphenol), and mixtures thereof.

The total content of radical stabilizing agent(s), in the component B of the composition, may range from 0% to 0.5% by weight, preferably from 0.001 % to 0.3%, and more preferably from 0.01% to 0.1% by weight based on the total weight of the component B.

The acid stabilizing agents are typically inhibitors of the anionic polymerization. The acid stabilizing agent may be selected from the group consisting of Bronsted acids, Lewis acids, and mixtures thereof. The acid stabilizing agent ispreferably selected from the group consisting of methanesulfonic acid, p-toluenesulfonic acid, hydrofluoric acid, boron trifluoride, boron trifluoride etherate complex, fluoroboric acid, sulphur dioxide, and mixtures thereof.

In the second part of the composition, the total content of stabilizing agent(s) may generally range from 0% by weight to 1% by weight, preferably from 0.001% to 0.8%, and more preferably from 0.0015% to 0.7% by weight based on the total weight of the second part.

Typically, an adhesion promoter may be chosen from the group of aromatic carboxylic acid or anhydride, and preferably from the group consisting of trimellitic acid, trimellitic anhydride, pyromellitic acid, pyromellitic anhydride, dianhydride of 3,3',4,4'-benzophenonetetracarboxylic acid, itaconic acid, itaconic anhydride, 3-buten-1,2,3-tricarboxylic acid, and mixtures thereof.

The total content of adhesion promoter(s) in the second part of the composition may range from 0% to 0.1% by weight based on the total weight of the second part.

A suitable accelerating agent (or accelerator) may be selected from calixarenes, crown ethers (for example, 15 Crown 5, 18 Crown 6, Dibenzo 18 Crown 6, commercialized by Alfa Aesar), cyclodextrins, and mixtures thereof.

Typically, the content of the accelerator in the second part of the composition may range from 0% to 0.8% by weight based on the total weight of the second part.

A suitable thixotropic agent may be selected from the group consisting of hydrogenated castor oil optionally modified by reaction with an amine, polyamides, silica, and mixtures thereof.

Preferably, the thixotropic agent is silica, more preferably selected from the group consisting of fumed silica, hydrophobic fumed silica (for example Aerosil^{®} R202 commercialized by Evonik), hydrophilic fumed silica and precipitated silica.

Typically, the content of the thixotropic agent in the second part of the composition may range from 2% to 10% by weight, preferably from 3% to 8%, and more preferably from 4% to 7% by weight based on the total weight of the second part.

A suitable thickener or thickening agent for the second part of the composition can be selected from those which are compatible with the monomers that it contains. Among them can be mentioned poly(meth)acrylates, acylated cellulose polymers, for example cellulose acetate, polyvinyl acetates, partially hydrolysed polyvinyl acetates, polyvinylpyrrolidones, polyoxylates, polycaprolactones, polycyanoacrylates, vinyl acetate copolymers, for example, with vinyl chloride, copolymers of (meth)acrylates with butadiene and styrene, copolymers of vinyl chloride and acrylonitrile, copolymers of ethylene and vinyl acetate, poly[butyleneterephthalate-co-polyethyleneglycolterephthalate, copolymers of lactic acid and caprolactone, and mixtures thereof.

These thickening agents are well known to the skilled in the art and have been described in the prior art. Preferably, in the composition of the invention the thickener is selected from the group consisting of poly(meth)acrylates, polyvinylpyrrolidones, polyvinyl acetates, partially hydrolysed polyvinyl acetates, vinyl acetate copolymers, and acylated cellulose polymers. A suitable thickener for first part of the composition can be, for example, polymethylmethacrylate (for example Degacryl^{®} M 449, Evonik), copolymers of vinyl acetate and vinyl alcohol (for example Levamelt^{®} 900, Lanxess), copolymers of vinyl chloride and vinyl acetate (for example, Vinnol^{®} H 40-60, Wacker), copolymers of ethylene, vinyl acetate, and esters or partial esters of maleic acid (for example, Vamac^{®} G, DuPont), and mixtures thereof. Polycyanoacrylates themselves may be added to cyanoacrylate compositions to confer a degree of thickening. Furthermore viscous functionalise resins can also act as thickeners in place of any additional polymeric additives.

A per-compound is a compound that contains the group O-O in the structure, such as for example a perester, perborate, persulfate, peracetal, or peroxide.

Suitable per-compounds are, for example, *tert-*butyl perbenzoate (TBPB) or *tert*-butyl peroxide (TBP).

If present, the total content of the per-compound is preferably comprised between 0.1% and 1% by weight, preferably between 0.1% and 0.5% by weight based on the total weight of the second part of the composition.

In a preferred embodiment, the component B does not comprise cyanoacrylate compound.

### Composition

The two-part composition may be dispensed from packages (such as two-part syringes) or from reservoir pots. The former are generally convenient for manual application and the volume ratio first part: second part may range from 1 : 1 to 10 : 1, more preferably 2 : 1, or 4 : 1. Two-part compositions may also be dispensed using automated equipment and mixing ratios may be continuously adjustable form 1:1 to 10:1.

In the two-part composition, the volume ratio first part: second part may range from 1 : 1 to 10 : 1, preferably from 2 : 1 to 5: 1, and even more preferably 4:1.

A preferred two-part curable composition comprises
- a first part (component A) comprising:
   - from 60 wt% to 99 wt% of alkyl cyanoacrylate monomer(s), said alkyl cyanoacrylate monomer(s) comprising only one cyanoacrylate function;
   - from 3 wt% to 20 wt% of one poly(2-cyanoacrylate) monomer having the formula (1-1) as defined above;
   - from 2 wt% to 10 wt% of thickener(s);
   - from 2 wt% to 10 wt% of thixotropic agent(s);
- A second par (component B) comprising :
   - from 5% to 40% by weight, more preferably from 5% to 20% by weight of difunctional (meth)acrylate component(s);
   - from 40% to 95% by weight, more preferably from 65% to 85% by weight of polyfunctional (meth)acrylate component(s);
   the difunctional and polyfunctional (meth)acrylate components being preferably ethoxylated.
   - from 0.01 % to 1 % by weight of nucleophilic initiator(s);
   - from 0% to 5% of thixotropic agent(s).

### Syringe or cartridge or dispense heads

The present invention also concerns a syringe or a cartridge or dispense heads comprising the two-part curable composition defined above.

Preferably, the syringe (or the cartridge) is a syringe (respectively a cartridge) with two chambers each of different volume, one for the first part of the composition and another one for the second part of the composition as defined above.

The first part of the composition is preferably placed in the chamber of larger volume.

The preparation of the adhesive is preferably made by the mixture of the two parts of the composition by hand pressure, or assisted by a gun, on the plungers of the syringe or the cartridge, which forces the content of the chambers to enter into the static mixer and, thus, at its outlet the adhesive of the invention is obtained. In the adhesive, the two components are advantageously intimately mixed.

For automated dispense preparation of the adhesive is preferably made by the mixture of the two parts of the composition by forcing them together into a valve and mixing element that constitutes a dispense head, so specific quantities of mixture of the desired composition can be dispensed onto parts.

### Use of the composition

The present invention also concerns the use of the two-part curable composition as defined above for bonding substrates.

The present invention also concerns a method for bonding substrates comprising the steps of:
- mixing together the two components of the two-part curable composition as defined above;
- applying the mixing obtained above to at least one of the substrates,
- mating together the substrates for a time sufficient to permit an adhesive bond to form between the mated substrates.

The two-part adhesive composition of the invention advantageously exhibits a good comprise between the following properties:
- Fast fixturing time : preferably lower than 1 min;
- High bond strengths with no gap and even with a gap of 2 mm;
- High resistance to thermal ageing;
- High resistance to submersion in hot water (for example gauged by bond strengths on clean ABS substrate after submersion and continuous exposure to neutral water at 60C for 3 days);
- Resistance to organic solvents (for example as illustrated by high degrees of insolubility at room temperature in acetone for 24 h);
- High hot strength (service temperature);
- Excellent shelf life stability.

More particularly, the two-curable composition according to the invention, advantageously exhibit simultaneously "hot strength" and heat resistance.

### Examples

All the following ingredients were used :
Ethyl cyanoacrylate (ECA) : Cartell Chemical Co Ltd
Methoxyethyl cyanoacrylate (MECA) : Cartell Chemical Co. Ltd
SO₂: Carburos Metalicos SA
Sartomer SR 454 : Ethoxylated trimethylolpropane triacrylate commercialized by Arkema
Sartomer SR349 : Ethoxylated bisphenol A dimethacrylate commercialized by Arkema
Degacryl 449: Polymethylmethacrylate commercialized by Evonik
Biscyanoacrylate of formula (1-1) with R = -(CH₂)₆- synthesised according to US 9,670,145 (1,6-hexanediol biscyanoacrylate)
Aerosil^{®} R202 : hydrophobic fumed silica commercialized by Evonik

The following products were obtained from Sigma Aldrich Merck: Methane Sulfonic Acid, TBPB (tert-butyl peroxy benzoate), hydroquinone, 4-methoxyphenol, itaconic acid, 2,2'-Methylenebis(6-tert-butyl-4-methylphenol)

The following materials were used in the examples:
Grit blasted mild steel (GBMS) lapshears (for all mechanical testing)
Mild steel (MS) lapshears (for fixture time assessment)

### The following methods were used to assess the performance of the compositions:

Tensile shear strength test data reflect bond strength measured in MPa after assembling overlapping lapshears (standard test pieces of grit blasted mild steel (GBMS)) with a contact area of 250 mm2, measured according to ASTM D1002. The bonded lapshears were first clamped and 'rested' for 24 h at room temperature (23°C ± 2°C) after assembly before testing.

The tests were carried out with an Instron tensile tester operating with a crosshead speed of 1.3 mm/min.

Tests for cure through volume (CTV) or gap, were performed using a small horseshoe shaped spacer of 2mm thickness around which gel-like adhesive as applied.

Testing for hot water resistance was conducted on assembled GBMS lapshear samples exposed to full submersion in hot water (at 60° C) for 3 days then rested for 24 hours at room temperature and destructively tested.

Testing for heat resistance was conducted on GBMS lapshears exposed to 150°C continuously for 3 days, then allowed to cool to room temperature and rest for 24hrs and then destructively tested.

Testing for hot strength ("service temperature") was conducted on GBMS lapshears heated to specific individual temperatures of 100, or 125 or 150°C. The heated samples were insulated with textile thermal lagging into which a thermocouple was also placed next to the substrate surfaces so actual temperature during destructive testing could be tracked. The samples were subjected to tensile loads while they are maintained at high temperatures during the actual destructive testing process.

Testing for solvent resistance and insolubility is measured on bulk cured polymers (0.3 g) after immersing samples for 24 hours in acetone (20 mL). The insoluble part is filtered and dried at 60 °C to constant mass and compared to the original mass or the cured material.

Fixture time (FT) is the time at which an adhesive bond (250 mm2) is capable of supporting a 3 kg load for 10 seconds at room temperature (23 ± 2 °C) under 50 % Relative Humidity (RH). FT was measured on mild steel (MS).

### Example 1: Two-part adhesive compositions

Several Part A and two Part B were prepared according to the compositions indicated in Table 1 below. For Part A formulations, powdered PMMA thickener was first dissolved in stabilized monofunctional CA monomer(s) at a temperature of at or below 65°C. Once a transparent mix had cooled to RT, solid biscyanoacrylate was dissolved at room temperature and subsequently the viscosity of the mixture was increased with fumed silica. Stabilizers were further added to component A. Adhesion promoter was added if required in a quantity sufficient to reach 100%wt for component A.

Part B formulations were prepared without any special precautions and without heating.

**TABLE 1**

| Compositions | Component | C1 | C2 (comparative) | C3 (comparative) | C4 (comparative) |
|---|---|---|---|---|---|
| First part | alkyl cyanoacrylate monomer | Ethyl cyanoacrylate (ECA) 78.84 wt% | Ethyl cyanoacrylate (ECA) 47.47 wt% | Ethyl cyanoacrylate (ECA) 53.37 wt% | Ethyl cyanoacrylate (ECA) 78.84 wt% |
| | | | Methoxy cyanoacrylate (MECA) 31.37 wt% | Methoxy cyanoacrylate (MECA) 35.49 wt% | |
| | hydroquinone | 850 ppm | 850 ppm | 850 ppm | 850 ppm |
| | 2,2'-Methylenebis(6-tert-butyl-4-methyl phenol) | 200 ppm | 200 ppm | - | 200 ppm |
| | methane sulfonic acid | 10 ppm | 10 ppm | 5 ppm | 10 ppm |
| | 1,6-hexanediol biscyanoacrylate formula (1-1) whith R = - (CH₂)₆- | 10 wt% | 10 wt% | - | 10 wt% |
| | Degacryl 449 (PMMA) | 6 wt% | 6 wt% | 6 wt% | 6 wt% |
| | Aerosil^{®} R202 (hydrophobic fumed silica) | 5 wt% | 5 wt% | 5 wt% | 5 wt% |
| | Itaconic acid (adhesion promoter) | up to 100wt% | up to 100wt% | up to 100wt% | up to 100wt% |
| | | | | | |
| Second part | SR349 | 23.88 wt% | 23.88 wt% | 23.88 wt% | - |
| | SR454 | 71.67 wt. % | 71.67 wt. % | 71.67 wt. % | - |
| | Caffeine | 0.20 wt% | 0.20 wt% | 0.20 wt% | 0.20 wt% |
| | *tert*-butyl perbenzoate | 0.25 wt% | 0.25 wt% | 0.25 wt% | - |
| | Hydrophobic fumed silica | 4 wt% | 4 wt% | 4 wt% | 4 wt% |
| | Glycerin triacetate | - | | | 95.8 wt% |

The first and second part of Table 1 were mixed and dispensed in a 4 : 1 ratio in volume. The two parts were loaded into a 4 : 1 syringe fitted with a 4 : 1 static mixer. The first part was the part of the largest volume.

The performance of the adhesives compositions are gathered in the following table 2. The columns of the table 2 refer to:
- Tensile shear strength of GBMS bonded lapshears (both zero gap and at 2mm gap between substrates) after 24h at room temperature (23°C ± 2°C).
- Tensile shear strength of GBMS bonded lapshears (zero gap between substrates) after exposing to 150°C for 3 days, then measured at room temperature (23°C ± 2°C).
- Tensile shear strength of GBMS bonded lapshears (zero gap between substrates) measured when parts were tested at 100°C (Hot Strength)
- Tensile shear strength of GBMS bonded lapshears (zero gap between substrates) measured when parts were tested at 125°C (Hot Strength).
- Tensile shear strength of GMBS bonded lapshears (zero gap between substrates) measured when parts were tested at 150°C (hot strength)
- Tensile shear strength of GMBS bonded lapshears (zero gap between substrates) measured when parts were tested at 125°C (hot strength), after exposing to 150°C for 3 days (a first step was to expose the parts at 150°C for 3 days without load, then return to room temperature, then the second step was to test the parts at 125°C (hot strength));
- Tensile shear strength of GMBS bonded lapshears (zero gap between substrates) measured when parts were tested at 150°C (hot strength), after exposing to 150°C for 3 days (a first step was to expose the parts at 150°C for 3 days without load, then return to room temperature, then the second step was to test the parts at 150°C (hot strength)).

**TABLE 2**

| **Composition** | **FT (sec)** | **Cured material (%) Insoluble in acetone (24 hour soak)** | **Tensile strength (MPa) Zero gap GBMS** | **Tensile strength (MPa) 2mm gap GBMS** | **Tensile strength (MPa) After 3 days at 150°C GBMS (thermal resistance)** | **Tensile Hot Strength (MPa) 100°C GBMS** | **Tensile Hot Strength (MPa) 125°C GBMS** | **Tensile Hot Strength (MPa) 125° C GBMS After 3 days at 150°C GBMS** | **Tensile Hot Strength (MPa) 150°C GBMS** | **Tensile Hot Strength (MPa) 150° C GBMS After 3 days at 150°C GBMS** | **Tensile strength (MPa) After 3 days in water 60°C GBMS** |
|---|---|---|---|---|---|---|---|---|---|---|---|
| **Composition C1 (invention)** | 45 | 81 | 16 | 9 | 18 | 8 | 6 | 5 | 2 | 2 | 13 |
| **Composition C2 (comparative)** | 40 | 92 | 16 | 9 | 15 | 4 | 2 | n.d. | 0 | 0 | 11 |
| **Composition C3 (comparative)** | 30 | 0 | 14 | 8 | 11 | 2.5 | 0 | 0 | 0 | 0 | 10 |
| **Composition C4 (comparative)** | 45 | 0 | 16 | 8 | 4 | n.d. | 0.5 | 0 | 0 | 0 | n.d. |

| | | | | | | | | | | | |
|---|---|---|---|---|---|---|---|---|---|---|---|
| n.d. : not determined | | | | | | | | | | | |

The composition C1 according to the invention advantageously exhibits both:
- a fast fixturing time (45 s);
- a high bond strength with no gap setting (16 MPa);
- a high bond strength at 2 mm gaps (9 MPa);
- a high thermal resistance (18MPa after 3 days at 150°C);
- a high tensile shear strength whilst hot as shown by hot strength values (8MPa at 100°C, 6 MPa at 125°C, 2 MPa at 150°C) even after long exposure to heat (after 3 days at 150°C, 5 MPa at 125°C, 2 MPa at 150°C)
- a high tensile shear strength after 3 days in water at 60°C, which shows good water resistance with time (13 MPa).

The comparative compositions C2, C3 and C4 exhibit lower (even zero) hot strength at 100°C (C2 : 4MPa, C3 : 2.5 MPa) and 125°C (C2 : 2MPa, C3 : 0 MPa, C4 : 0,5 MPa) compared to composition according to the invention (respectively 8 and 6 MPa at 100°C and 125°C).

The composition C1 according to the invention exhibits also higher thermal resistance (18 MPa) than comparative compositions C2, C3 and C4 (15MPa, 11 MPa and 4 MPa).

The composition C1 according to the invention exhibits also higher hot strength after prolonged thermal exposure (3d150°C) at 125°C (5 MPa) and 150°C (2 MPa) than comparative compositions C2, C3 and C4 (0 MPa for C3 and C4 at 125°C; 0 MPa for C2,C3 and C4 at 150°C).

## Claims

1. Two-part curable composition comprising:
• a first part (component A) comprising :
• at least 50% by weight based on the total weight of the first part, of one or more alkyl cyanoacrylate monomer, said alkyl cyanoacrylate monomer comprising only one cyanoacrylate function;
• one poly(2-cyanoacrylate) monomer having the following formula (I): 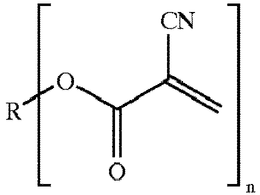 wherein R is an organic moiety and n is an integer higher or equal to 2;
• a second part (component B) comprising a (meth)acrylate component having at least two (meth)acrylate functions.

2. Two-part curable composition according to claim 1, wherein the alkyl cyanoacrylate monomer has the general formula (II): 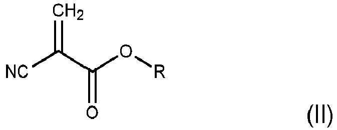 wherein R is a C₁-C₁₈ linear or branched alkyl group, preferably a C₁-C₁₀ linear or branched alkyl group, and even more preferably a C₁-C₈ linear or branched alkyl group.

3. Two-part curable composition according to any one of claims 1 or 2, wherein the alkyl cyanoacrylate monomer is chosen from the group consisting of methyl cyanoacrylate, ethyl cyanoacrylate, n-propyl cyanoacrylate, iso-propyl cyanoacrylate, n-butyl cyanoacrylate, sec-butyl cyanoacrylate, iso-butyl cyanoacrylate, tert-butyl cyanoacrylate, n-pentyl cyanoacrylate, 1-methylbutylcyanoacrylate, 1-ethylpropyl cyanoacrylate, neopentyl cyanoacrylate, n-hexyl cyanoacrylate, 1-methylpentyl cyanoacrylate, n-heptyl cyanoacrylate, n-octyl cyanoacrylate, 2-octyl cyanoacrylate, 2-ethylhexyl cyanoacrylate, n-nonyl cyanoacrylate, n-decyl cyanoacrylate, n-undecyl cyanoacrylate, and mixtures thereof.

4. Two-part curable composition according to any one of claims 1 to 3, wherein the total content of alkyl cyanoacrylate monomer(s) in the first part is higher or equal to 55%, preferably higher or equal to 60%, more preferably higher or equal to 70%, and in particular higher or equal to 75% by weight based on the total weight of said first part.

5. Two-part curable composition according to any one of claims 1 to 4, wherein the poly(2-cyanoacrylate) monomer has the following formula (I-1): 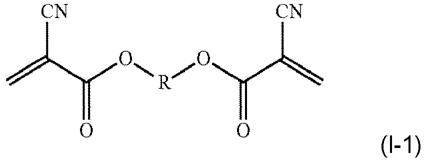 wherein R is an organic moiety.

6. Two-part curable composition according to any one of claims 1 to 5, wherein in formulas (I) and (1-1), R is an alkylene, an alkenylene, a cycloalkylene, an arylene, an alkoxyalkylene, an aralkylene, or the divalent residue of a polymer such as for example a polyolefin, a polysiloxane, a polyester, a polyether, a polyurethane, a polyethylene glycol, or a polypropylene glycol, R representing preferably an alkylene.

7. Two-part curable composition according to any one of claims 5 or 6, wherein in the formula (1-1), R represents -(CH₂)ₘ- with m being 2, 3, 4, 5, 6, 8, 9, 10 or 12.

8. Two-part curable composition according to any one of claims 1 to 7, wherein the total content of poly(2-cyanoacrylate) monomer(s)in the first part is higher than 3% by weight, preferably ranges from 3% to 20% by weight, and even more preferably from 5% to 15% by weight, based on the total weight of the first part.

9. Two-part curable composition according to any one of claims 1 to 8, wherein the first part of the composition further contain at least one additive for example chosen from the group consisting of: a thixotropic agent, a thickening agent, a toughening agent, an accelerating agent, an adhesion promoter, a pigment, a colorant, a stabilizing agent, an antioxidant, a plasticizer, and mixtures thereof.

10. Two-part curable composition according to any one of claims 1 to 9, wherein the component B comprise more than 80 % by weight, preferably more than 90% by weight, even more preferably more than 95% by weight of the total of (meth)acrylate component(s), based on the total weight of said component B.

11. Two-part curable composition according to any one of claims 1 to 10, wherein the (meth)acrylate component having at least two (meth)acrylate functions is selected from the group consisting of:
- difunctional (meth)acrylate component such as for example butanediol di(meth)acrylate, hexanediol di(meth)acrylate, diethylene glycol di(meth)acrylate, triethyleneglycol di(meth)acrylate, polyethylene glycol di(meth)acrylate, triethylene oxide dimethacrylate, tricyclodecane dimethanol diacrylate, neopentylglycol diacrylate, bisphenol-A-diacrylate, bisphenol-A-dimethacrylate, ethoxylated bisphenol-A-diacrylate, ethoxylated bisphenol-A-dimethacrylate, propoxylated bisphenol-A-diacrylate, (meth)acrylate functionalized oligomers and polymers, and mixtures thereof;
- polyfunctional (meth)acrylate component such as for example tris-(2-hydroxyethyl) isocyanurate triacrylate, trimethylolpropane tri(meth)acrylate (TMPTA), ethoxylated trimethylolpropane triacrylate (TMPETA), ethoxylated trimethylolpropane trimethacrylate, pentaerythritol tetraacrylate (PETA), pentaerythritol tetramethacrylate (PETMA), dipentaerythritol penta(meth)acrylate, dipentaerythritol hexa(meth)acrylate, (meth)acrylate functionalized oligomers and polymers, and mixtures thereof;
- mixtures thereof.

12. Two-part curable composition according to any one of claims 1 to 11, wherein the component B comprises a mixture of: a difunctional (meth)acrylate component and a polyfunctional (meth)acrylate component, the component B preferably comprising :
- from 5% to 40% by weight, more preferably from 5% to 20% by weight of difunctional (meth)acrylate component(s);
- from 40% to 95% by weight, more preferably from 65% to 85% by weight of polyfunctional (meth)acrylate component(s).

13. Two-part curable composition according to any one of claims 1 to 12, wherein the difunctional and polyfunctional (meth)acrylate component(s) are ethoxylated.

14. Two-part curable composition according to any one of claims 1 to 13, wherein the component B comprises a nucleophilic initiator for cyanoacrylate polymerization, said nucleophilic initiator being preferably selected from the group consisting of organic bases, salts with a hard anion, reactive inorganic fillers, metal salts with organic counter anions, and mixtures thereof.

15. Two-part curable composition according to any one of claims 1 to 14, wherein the component B further contain at least one additive chosen from the group consisting of: a thixotropic agent, a thickening agent, a toughening agent, an accelerating agent, a per-compound, an adhesion promoter, a pigment, a colorant, a stabilizing agent, an antioxidant, a plasticizer, and mixtures thereof.

16. Two-part curable composition according to any one of claims 1 to 15, wherein the volume ratio first part: second part ranges from 1 : 1 to 10 : 1, preferably from 2 : 1 to 5: 1, and even more preferably 4:1.

17. Two-part curable composition according to any one of claims 1 to 16, comprising:
• a first part (component A) comprising:
- from 60 wt% to 99 wt% of alkyl cyanoacrylate monomer(s), said alkyl cyanoacrylate monomer(s) comprising only one cyanoacrylate function;
- from 3 wt% to 20 wt% of one poly(2-cyanoacrylate) monomer having the formula (I-1) as defined in any one of claims 5 to 7;
- from 2 wt% to 10 wt% of thickener(s);
- from 2 wt% to 10 wt% of thixotropic agent(s);
• A second par (component B) comprising :
- from 5% to 40% by weight, more preferably from 5% to 20% by weight of difunctional (meth)acrylate component(s);
- from 40% to 95% by weight, more preferably from 65% to 85% by weight of polyfunctional (meth)acrylate component(s);
the difunctional and polyfunctional (meth)acrylate components being preferably ethoxylated.
- from 0.01% to 1% by weight of nucleophilic initiator(s);
- from 0% to 5% of thixotropic agent(s).

18. Syringe or cartridge or dispense heads comprising the two-part curable composition as defined in any one of claims 1 to 17.

19. Method for bonding substrates comprising the steps of:
mixing together the two components of the two-part curable composition as defined in any one of claims 1 to 17;
applying the mixing obtained above to at least one of the substrates,
mating together the substrates for a time sufficient to permit an adhesive bond to form between the mated substrates.
